# EUROPEAN PATENT SPECIFICATION

(11) **EP 2 504 979 B1**
(45) Date of publication and mention of the grant of the patent: **06.05.2015**
(21) Application number: 10819681.7
(22) Date of filing: 16.11.2010
(51) Int. Cl.: H04L 29/08

(54) **Method and system for synchronizing user content in a social network**
Verfahren und System zur Synchronisation von Benutzerinhalten in einem sozialen Netzwerk
PROCÉDÉ ET SYSTÈME DE SYNCHRONISATION D'UN CONTENU D'UTILISATEUR DANS UN RÉSEAU SOCIAL

(30) Priority: 23.11.2009 US 624016
(43) Date of publication of application: 03.10.2012
(73) Proprietor: Telefonaktiebolaget L M Ericsson (publ), 164 83 Stockholm (SE)
(72) Inventor: MCALEER, David, Toronto, Ontario, M4L 3N8 (CA)
(74) Representative: Röthinger, Rainer
(86) International application number: PCT/IB2010/055205
(87) International publication number: WO 2011/061683

(56) References cited:
- US-A1- 2005 114 534
- pcworld.com: "Social Media Aggregators That Bring It All Together", , 3 August 2009 (2009-08-03), pages 1-5, XP55000304, Retrieved from the Internet: URL:http://www.pcworld.com/printable/artic le/id,169515/printable.html [retrieved on 2011-06-08]

## Description

### TECHNICAL FIELD

This disclosure relates generally to synchronization of data with external networks.

### BACKGROUND

In the field of social networking a plurality of different social networks have arisen. Some of these networks are activity specific, focusing on having users provide one type of information. Other social networks attempt to be more holistic, allowing users to provide multiple information types. Because the utility of a social network platform relies upon its user base in addition to the functionality it allows, it is common for users to have accounts with a plurality of different social media platforms so that they can connect with different groups of contacts.

There has been a proliferation of social media platforms, each of which allow a user to perform similar functions. Each of these networks provide a user with access to a fragment of their overall social network. Accessing each of these networks in series is a time consuming and odious task for many users. Users accessing social media platforms through a mobile device are faced with additional problems including form-factor limited input devices and limited bandwidth. Social media platforms do not readily communicate with each other, and often artificially prevent a user from updating content from other networks.

While updating a status message on a number of different services is time consuming, even on a mobile device there is sufficient bandwidth to make this possible. However, richer content, such as photos and videos, become more problematic to update on numerous platforms from a mobile device, as the time required is increased due to the limited bandwidth available to the device and due to the costs associated with per-data-unit pricing.

Social media portals, or aggregators, seek to address these issues. A user can create a profile at the portal and provide credentials to at least one social media platform. Instead of connecting to the platform, the user can connect to the portal, provide status updates, update content such as photo and videos, and perform other social media activities. The portal then synchronizes with the social media platforms for which credentials have been provided, typically through the use of Application Program Interfaces (APIs) specific to the social media platform. The portal can upload data to each of the social media platforms, and can optionally download content from each of them to serve as a synchronization service as well.

One skilled in the art will appreciate that although this provides the user with the ability to have a single point of contact from which updates can be posted to a number of different social media platforms, there are implementation issues that arise. One of the issues that arises is that a portal typically has a limited amount of bandwidth available with which to connect to each of the social media platforms. As the number of users and supported social media platforms grows, the volume of data increases dramatically. This greatly increases the cost of providing a synchronization service. As the number of users making use of social media portals increases, and as the number of social media platforms supported by portals increases, problems of efficiently utilizing available bandwidth become more crucial to providing a usable service to the users.

Further aggravating this problem is users who do not update information frequently, still consume bandwidth, as the social media portal is required to check to see if the social media platform has been updated. Even when no data is to be synchronized, bandwidth is consumed. In many implementations determining that each of a large number of users once again has no data to synchronize for a plurality of different media types at a number of social media platforms results in a large amount of wasted bandwidth.

US2005/114534 A1 teaches a technique of synchronizing content with a social media platform from a social media portal. Further prior art can be found in pcworld.com: "Social Media Aggregators That Bring It All Together", 3 August 2009, pages 1 to 5.

Therefore, it would be desirable to provide a mechanism for more efficiently utilizing the bandwidth available to a social media portal to synchronize content with social media platforms.

### SUMMARY

It is an object of the present invention to obviate or mitigate at least one disadvantage of the prior art.

In a first aspect of the present invention, there is provided a method of synchronizing content with a social media platform from a social media portal. The method comprises the steps of: selecting a synchronization activity from a ranked list; connecting to a social media platform associated with the selected activity; synchronizing data associated with the selected synchronization activity and the connected social media platform if the social media portal and social media platform have different data; and placing the synchronization activity back into the ranked list at a location determined in accordance with whether synchronization was necessary. In an embodiment of the first aspect of the present invention, the step of selecting includes selecting a plurality of synchronization activities from the ranked list. In such an embodiment, the steps of connecting, synchronizing and placing can be performed for each for each of the plurality of activities and the number of activities in the plurality is determined by an available bandwidth value. In another embodiment of the present invention, synchronization is determined to be necessary if the social media platform and social media portal have different data. In a further embodiment of the present invention, the step of placing the synchronization activity back into the ranked list includes computing a rank associated with the user synchronization activity and placing the synchronization activity into the ranked list in accordance with the computed rank. In a further embodiment, the method includes the step of computing a next synchronization time in accordance with the rank and a weighting associated with the synchronization activity and wherein the step of placing the synchronization activity into the ranked list is done in accordance with the computed next synchronization time. In another embodiment, the step of selecting is performed at a synchronization engine in a social media portal, and the step of connecting is performed using an interface specific to the social media platform.

In some embodiments of the present invention, the step of selecting a synchronization activity is performed by a synchronization engine, the steps of connecting and synchronizing are performed by the synchronization engine in conjunction with an external update interface and the step of placing the synchronization activity back into the ranked list is performed by a ranking engine.

In a second aspect of the present invention, there is provided a social media portal for synchronizing user content with a social media platform. The portal comprises a social content database, a user database, a synchronization list, a synchronization engine and a ranking engine. The social content database stores data associated with a user. The user database stores profile information associated with the user. The synchronization list stores ranked synchronization activities. The synchronization engine synchronizes data stored in the social content database with the social media platform through a social media platform interface, in accordance with the profile information on a schedule determined in accordance with the synchronization list. The ranking engine determines determining a rank associated with synchronization activities, and orders the synchronization list in accordance with the determined rank.

In an embodiment of the second aspect of the present invention, the profile information includes identification of an account at the social media platform and credentials associated with the user and the identified account, and optionally profile information further includes an indication of types of content supported by the social media platform. In another embodiment, the value of the rank determined by the ranking engine is decremented upon the social media platform interface indicating to the ranking engine that a successful synchronization occurred. In a further embodiment, a lower value of the rank results in a more frequent synchronization. In another embodiment, the ranking engine orders the synchronization list by assigning a synchronization time to each synchronization activity, the synchronization time determined in accordance with the determined rank.

Other aspects and features of the present invention will become apparent to those ordinarily skilled in the art upon review of the following description of specific embodiments of the invention in conjunction with the accompanying figures. The invention is defined by the appended claims.

### BRIEF DESCRIPTION OF THE DRAWINGS

Embodiments of the present invention will now be described, by way of example only, with reference to the attached Figures, wherein:
Figure 1 is a flowchart illustrating a method of the present invention;
Figure 2 is a flowchart illustrating a method of the present invention;
Figure 3 is a flowchart illustrating a method of the present invention;
Figure 4 is a block diagram illustrating a logical element implementation of a system of the present invention; and
Figure 5 is a block diagram illustrating a logical element implementation of a system of the present invention.

### DETAILED DESCRIPTION

The present invention is directed to a system and method for effectively using bandwidth during the synchronization of data across a plurality of social media platforms with a social media portal.

Reference may be made below to specific elements, numbered in accordance with the attached figures. The discussion below should be taken to be exemplary in nature, and not as limiting of the scope of the present invention. The scope of the present invention is defined in the claims, and should not be considered as limited by the implementation details described below, which as one skilled in the art will appreciate, can be modified by replacing elements with equivalent functional elements.

In the present invention, issues related to the scalability of social media portal, or aggregator, are addressed. Whereas, in the prior art, synchronization of the user's content generates large quantities of overhead related traffic the present invention makes use of a prioritized synchronization system to reduce both overhead traffic and overall network traffic.

In understanding the motivation of the present invention, it is important to understand that as with many systems, a small percentage of the users of a social media portal or aggregator generate a disproportionately large amount of the overall traffic. These heavy users not only provide more content, they provide content more frequently and are thus more likely to notice a degradation in the service provided by the portal. A large portion of the remaining users generate very little traffic. These users are the least likely to need high levels of service, and are unlikely to be aware of slower service from the portal. The present invention seeks to maximize the effectiveness of the available bandwidth by prioritizing user synchronization activities so that user expectations are met.

Mechanisms are employed to prioritize user synchronization activities, and additionally mechanisms can be employed to determine whether or not a synchronization is required. By combining the prioritization of user synchronization activities and the ability to determine if content needs to be synchronized, bandwidth usage can be directed to users who make use of the system the most frequently. By having the prioritization mechanism make use of current usage patterns, a user who exhibits bursty activity, e.g. high levels of activity on a particular social media platform during certain hours, will be provided prioritized service as the higher activity continues, but will have prioritization levels decreased during less frequent usage times.

A system of the present invention employs a prioritized and a ranked list of user synchronization activities. Each social media platform allows the user to perform at least one type of activity that can be synchronized by the portal. A first social media platform may allow status updates, while a second permits status updates, music recommendations, and photo album creation and sharing, while a third permits the creation of both photo and video albums. In one embodiment of the present invention, each activity on a social media platform can become a separate user synchronization activity. This allows priority to be given to different types of user activities on a global basis, and furthermore allows a user that generates a large quantity of one type of content to have that type of content prioritized over content types that are not frequently generated. As infrequent users are deprioritized, the amount of traffic generated determining if synchronization is needed is reduced. This portion of the bandwidth can then be used to synchronize activity of other users. Thus, the limited bandwidth between a social media portal or aggregator and a plurality of different social media platforms can be used more efficiently, without impacting the user experience.

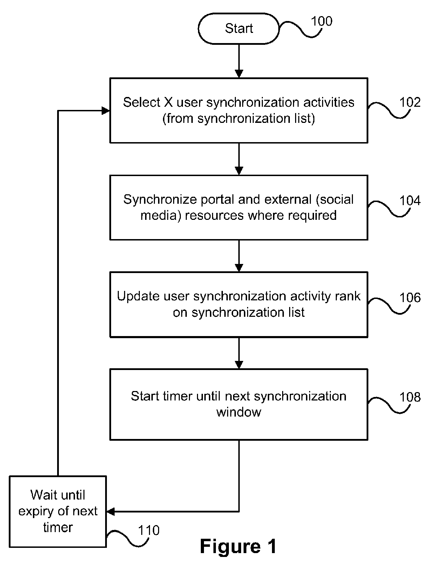

Figure 1 is a flowchart illustrating an embodiment of a method of the present invention. The process starts in step 100 with the system determining that user synchronization activities should be performed. One skilled in the art will appreciate that the synchronization activities can include a one-way data transfer from a social media aggregator to a social media site, a one-way transfer from a social media site to an aggregator, or a bidirectional data transfer. In step 102 user synchronization activities, from a synchronization list, are selected. In a presently preferred embodiment, the synchronization activities at the top of the list are selected, and a ranking score is used to determine an activity is placed on the list. The list can be sorted by an activity time that specifies when an activity is to be performed, in which case the activity time is determine in accordance with the user rank. The number of user synchronization activities selected can vary in different implementations of the present invention. As will be discussed later, this number can be either static or dynamically determined. In step 104 the user synchronization activities selected in step 102 are performed, resulting in synchronization of the social media portal with external resources such as social media sites. In step 106 the user rank of the synchronization list is updated based on the results of the synchronization activity in step 104. Upon updating the prioritized user activity synchronization list in step 106 a timer is started to count down until the next synchronization window in step 108. In step 110 the process pauses until the timer set in step 108 expires. Upon the expiry of the timer the process starts again at step 102.

One skilled in the art will appreciate that the above example, and those that follow, discuss a synchronization list that contains different user synchronization activities. This is intended to be exemplary in nature, and should not be considered to be restrictive. The systems and method of the present invention can be implemented using a plurality of different synchronization lists without departing from the scope of the present invention.

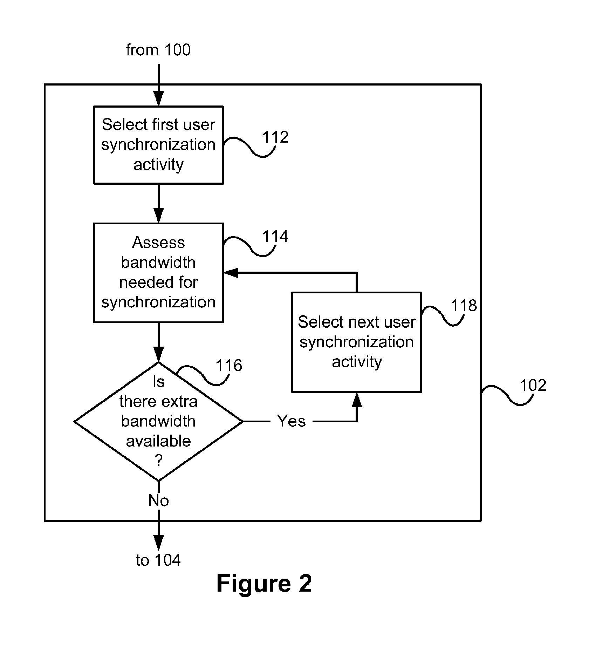

As noted above, the manner in which user synchronization activities are selected from the prioritized ranked list can vary. If the ranked list contains solely one type of synchronization activity, and each of the synchronization activities consumes a known amount of bandwidth the available bandwidth can be divided by that number to determine how many synchronization activities are selected. Alternatively, as illustrated in Figure 2, a dynamic method can be employed to select a variable number of synchronization activities. In step 112 a first user synchronization activity is selected from the ranked list. Preferably, this is the top ranked prioritized item. An assessment is made in step 114 of the bandwidth needed for all of the selected synchronization activities. If additional bandwidth is available, as determined in step 116, the next user synchronization activity is selected from the list in step 118. The process returns to step 114 and this cycle is continued until sufficient user synchronization activities have been selected to consume the available bandwidth in step 116. When it has been determined, in step 116, that there is no further additional available bandwidth the process continues to step 104.

In an alternate embodiment, the user synchronization list ranks activities on the basis of when they are to be performed. The user rank is used in accordance with other design parameters to determine when synchronization will be performed. The synchronization list is then constructed and ordered on the basis of what activity is to be performed next. This time can then either be considered an objective that can be put aside if there are too many other activities or that can be performed earlier than planned if the traffic flow is light, or it can be considered a requirement so that at the appointed time all activities are selected for synchronization. One skilled in the art will appreciate that other variations can also be implemented.

As noted above, it is often important to determine if content has been modified prior to a synchronization activity. Those skilled in the art will appreciate that this can be done by comparison of a hash of the content stored at the social media platform and portal. When the content hashes are equal, it can be decided that no synchronization is required. If no synchronization is performed, it is an indication that the user has not updated any content, and thus may be entering a period in which content updates are infrequent. Conversely, if synchronization was performed, it is likely indicative that the user will be adding more social content, and that the user rank should be increased.

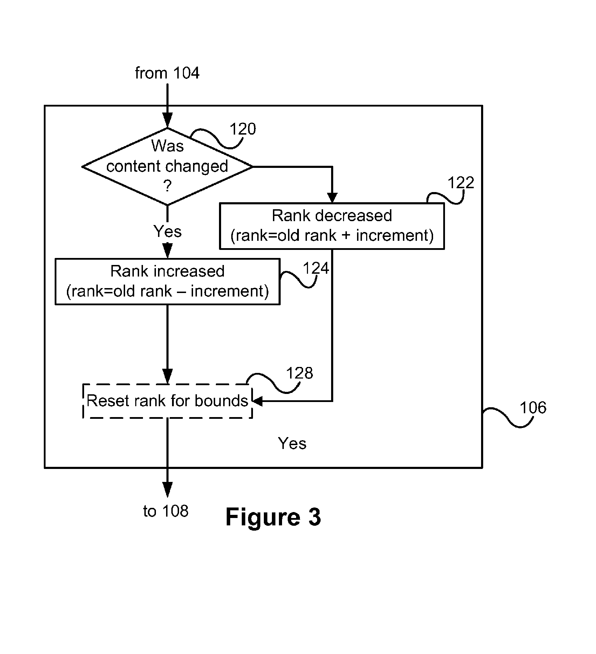

Figure 3 illustrates an exemplary method of updating the user rank on the synchronization list. In step 120 a determination is made as to whether or not synchronization was required in step 104 for a particular user synchronization activity. As an example, if during step 104, it is determined that both the social media platform and portal have the same data, an update need not be performed. If, in step 120, it is determined that content was not changed, the method proceeds to step 122. In this scenario, the user priority is downgraded (rank is decreased) and in this particular exemplary embodiment the user rank value is incremented so that a higher ranking number is assigned to the user. If in step 120 it is determined that content was changed, and thus the synchronization was necessary, the method proceeds to step 124 where the user priority is upgraded (rank is increased) and in this particular exemplary embodiment the user rank value is decremented so that a lower ranking number is assigned to the user. Following either of steps 122 or 124 the process can continue to optional step 126 where the modified rank is adjusted so that it is confined to a certain set of boundary. In one exemplary embodiment, the rank is bounded between 0.1 and 1.0, and when a synchronization has occurred, the user rank value is decreased by 0.1, and conversely when synchronization has not occurred, the user rank value is increased by 0.1. Users with a lower ranking number are assigned a higher priority in this exemplary embodiment.

One skilled in the art will appreciate that use of social media platform by a given user is typically confined to certain time windows during a day. For example, some users frequently make use of one social networking platform during business hours and very infrequently make use of that platform outside of business hours. The same users may make frequent use of a different social networking platform in the evenings but in no other points during the day. In both these cases, after a first synchronization is performed further synchronizations are preferably performed at increasingly shorter durations reflecting the fact that the user is more active. As user activity on a particular platform declines the time between synchronizations can be increased. This dynamic adjustment process, which is preferably controlled by manipulation of the user rank associated with a particular synchronization activity allows the aggregator's bandwidth to be more efficiently employed.

One skilled in the art will appreciate that a number of different mechanisms can be employed to determine how long the window between user synchronization activities should be. In a presently preferred embodiment, this window is calculated as a function of both the user rank and a weighting assigned to the particular type of user synchronization activity. Thus, the aggregator is able to perform a status update synchronization more often than a photo album synchronization as a design decision (design decisions that prioritize one type of activity over another are matters of implementation specific details). In a presently preferred embodiment, the user rank assigned to a particular user synchronization activity determines how frequently a particular user's status update or photo album will be synchronized. In a presently preferred embodiment, the time to the next synchronization is determined as a function of both the weighting assigned to the activity and the user ranking associated with the activity. As noted in the above described embodiment, as an activity becomes more prioritized it has a lower rank value. In one embodiment, the time of the next synchronization is set as the current time+(user rank)²*(activity weight). One skilled in the art will appreciate that other factors can be added included constant multipliers or constant adders without departing from the scope of the present invention.

As a user begins to increase the frequency of a particular activity, the subsequent synchronization window is shortened. This continues as long as the user continues to have activities to be synchronized or until the lower bound is reached. When the user ceases frequent updates the synchronization window is lengthened. One skilled in the art will appreciate that if separate synchronization activities are defined for each type of content supported by a social media platform a user who frequently updates a status message will not necessarily have frequent updates of other media types such as photo or video updates.

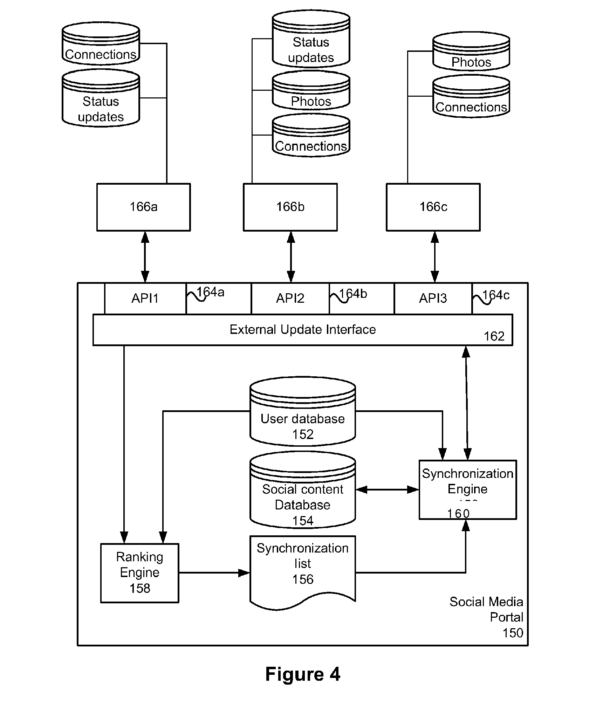

Figure 4 illustrates an exemplary embodiment of the system of the present invention. A social media portal 150 connects to a plurality of external social media platforms indicated as social media platforms 166a, 166b and 166c. Each of the platforms can support a variety of social media types, and can also provide updates from the users' connections. Social media portal 150 synchronizes content received from a user with the aforementioned social media platforms, and receives relevant information associated with the user from these platforms.

User profile information is stored by portal 150 in user database 152. Social content associated with accounts stored in the user database is stored in social content database 154. One skilled in the art will appreciate that the content stored in social content database 154 can be received from a user using any of a number of conventional mechanisms, or can be received from the social media platforms with which synchronization is performed. The prioritized synchronization list referred to in earlier figures is illustrated as element 156. A ranking engine 158 is used to determine user synchronization activity placement on the list 156. A synchronization engine 160 interfaces with the external update interface 162 to drive synchronization within the external social media platforms. External update interface 162 interfaces with each of the external social media platforms 166a-166c through a series of application programming interfaces (API) referred to as API1 164a, API1 164b and API1 164c respectively.

In operation, external update interface 162 provides information indicative of whether or not a particular user synchronization activity was performed to ranking engine 158. In conjunction with information provided by user database 152, ranking engine 158 updates the rank of the user synchronization activity, and places the subsequent user synchronization activity in the list 156 (as noted above, this list can be ordered by the time of the next synchronization which would be determined in accordance with the rank generated by ranking engine 158). This updating has a direct effect on the prioritization of the synchronization activity. The synchronization list 156 serves as a control input to synchronization engine 160. In conjunction with the user database 152, the synchronization list 156 is used by synchronization engine 160 to drive external update interface 162. Based upon user credentials stored in user database 152 and the priority rankings stored in synchronization list 156, synchronization engine 160 connects to the relevant social media platform (though the interface 162 and the relevant API) and determines whether or not the content stored in social content database 154 require synchronization with the relevant external social media platform. If the synchronization is to occur the data is sent from synchronization engine 160 through the external update interface 162 and the relevant API 164a, 164b or 164c to the social media platform 166. External update interface 162 provides an indication to ranking engine 158 as to whether or not a synchronization activity occurred. This information is used to update the user rank as discussed above.

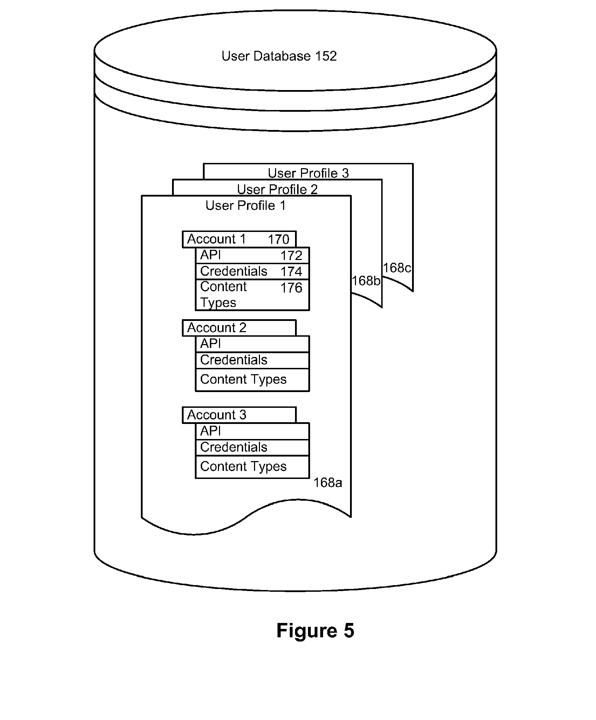

Figure 5 illustrates an exemplary embodiment of the content of user database 152. User database 152 contains a plurality of user profiles 168 (individually shown as 168a, 168b and 168c). An exemplary user profile, profile 168a indicates an account 170 associated with a social media platform, the relevant API 172 used to connect to the account 170, credentials 174 associated with the account 170 and the types of content associated with account 170. One skilled in the art will appreciate that although some social networks have only one content type others can support multiple content types. If multiple content types are supported it is possible to have different synchronization activities for each content type.

Embodiments of the invention may be represented as a software product stored in a machine-readable medium (also referred to as a computer-readable medium, a processor-readable medium, or a computer usable medium having a computer readable program code embodied therein). The machine-readable medium may be any suitable tangible medium including a magnetic, optical, or electrical storage medium including a diskette, compact disk read only memory (CD-ROM), digital versatile disc read only memory (DVD-ROM) memory device (volatile or non-volatile), or similar storage mechanism. The machine-readable medium may contain various sets of instructions, code sequences, configuration information, or other data, which, when executed, cause a processor to perform steps in a method according to an embodiment of the invention. Those of ordinary skill in the art will appreciate that other instructions and operations necessary to implement the described invention may also be stored on the machine-readable medium. Software running from the machine-readable medium may interface with circuitry to perform the described tasks.

The above-described embodiments of the present invention are intended to be examples only. Alterations, modifications and variations may be effected to the particular embodiments by those of skill in the art without departing from the scope of the invention, which is defined solely by the claims appended hereto.

## Claims

1. A method of synchronizing content with a social media platform from a social media portal, the method comprising:
- selecting a synchronization activity from a ranked list;
- connecting to a social media platform associated with the selected activity;
- synchronizing data associated with the selected synchronization activity and the connected social media platform if the social media portal and social media platform have different data; and **characterized by**
- placing the synchronization activity back into the ranked list at a location determined in accordance with whether synchronization was necessary.

2. The method of claim 1 wherein the step of selecting includes selecting a plurality of synchronization activities from the ranked list.

3. The method of claim 2 wherein the steps of connecting, synchronizing and placing are performed for each for each of the plurality of activities.

4. The method of claim 2 wherein the number of activities in the plurality is determined by an available bandwidth value.

5. The method of claim 1 wherein synchronization is determined to be necessary if the social media platform and social media portal have different data.

6. The method of claim 1 wherein the step of placing the synchronization activity back into the ranked list includes:
- computing a rank associated with the user synchronization activity; and
- placing the synchronization activity into the ranked list in accordance with the computed rank.

7. The method of claim 6 further including the step of computing a next synchronization time in accordance with the rank and a weighting associated with the synchronization activity and wherein the step of placing the synchronization activity into the ranked list is done in accordance with the computed next synchronization time.

8. The method of claim 1 wherein the step of selecting is performed at a synchronization engine in a social media portal, and the step of connecting is performed using an interface specific to the social media

9. The method of claim 1 wherein the step of selecting a synchronization activity is performed by a synchronization engine, the steps of connecting and synchronizing are performed by the synchronization engine in conjunction with an external update interface and the step of placing the synchronization activity back into the ranked list is performed by a ranking engine.

10. A social media portal (150) for synchronizing user content with a social media platform, the portal comprising:
- a social content database (154) for storing data associated with a user;
- a user database (152) for storing profile information associated with the user;
- a synchronization list (156) for storing ranked synchronization activities;
- a synchronization engine (158) for synchronizing data stored in the social content database with the social media platform through a social media platform interface, in accordance with the profile information on a schedule determined in accordance with the synchronization list; and
**characterized by** - a ranking engine (160) for determining a rank associated with synchronization activities, and for ordering the synchronization list in accordance with the determined rank.

11. The portal of claim 10 wherein the profile information includes identification of an account at the social media platform and credentials associated with the user and the identified account.

12. The portal of claim 11 wherein the profile information further includes an indication of types of content supported by the social media platform.

13. The portal of claim 10 wherein a value of the rank determined by the ranking engine is decremented upon the social media platform interface indicating to the ranking engine that a successful synchronization occurred.

14. The portal of claim 13 wherein a lower value of the rank results in a more frequent synchronization.

15. The portal of claim 10 wherein the ranking engine orders the synchronization list by assigning a synchronization time to each synchronization activity, the synchronization time determined in accordance with the determined rank.

## Patentansprüche

1. Verfahren zum Synchronisieren von Inhalten mit einer Soziale-Medien-Plattform eines Soziale-Medien-Portals, das Verfahren umfassend:
- Auswählen einer Synchronisationstätigkeit aus einer Rangliste;
- Verbinden mit einer Soziale-Medien-Plattform, welche der ausgewählten Tätigkeit zugeordnet ist;
- Synchronisieren von Daten, welche der ausgewählten Synchronisationstätigkeit und der verbundenen Soziale-Medien-Plattform zugeordnet sind, falls das Soziale-Medien-Portal und die Soziale-Medien-Plattform verschiedene Daten aufweisen; und
**gekennzeichnet durch**
- Setzen der Synchronisationstätigkeit zurück in die Rangliste an eine Position, welche in Abhängigkeit davon bestimmt wird, ob die Synchronisation notwendig war.

2. Verfahren nach Anspruch 1, wobei der Schritt des Auswählens ein Auswählen einer Mehrzahl von Synchronisationstätigkeiten aus der Rangliste beinhaltet.

3. Verfahren nach Anspruch 2, wobei die Schritte des Verbindens, des Synchronisierens und des Setzens für jede der Mehrzahl von Tätigkeiten durchgeführt wird.

4. Verfahren nach Anspruch 2, wobei die Anzahl von Tätigkeiten in der Mehrzahl durch einen Wert einer verfügbaren Bandbreite bestimmt wird.

5. Verfahren nach Anspruch 1, wobei die Synchronisation als notwendig bestimmt wird, falls die Soziale-Medien-Plattform und das Soziale-Medien-Portal verschiedene Daten aufweisen.

6. Verfahren nach Anspruch 1, wobei der Schritt des Setzens der Synchronisationstätigkeit zurück in die Rangliste beinhaltet:
- Berechnen eines Rangs, welcher der Benutzer-Synchronisationstätigkeit zugeordnet ist; und
- Setzen der Synchronisationstätigkeit in die Rangliste entsprechend des berechneten Rangs.

7. Verfahren nach Anspruch 6, weiter umfassend den Schritt des Berechnens einer nächsten Synchronisationszeit entsprechend des Rangs und eines Gewichts, welches der Synchronisationstätigkeit zugeordnet ist, und wobei der Schritt des Setzens der Synchronisationstätigkeit in die Rangliste entsprechend der berechneten nächsten Synchronisationszeit ausgeführt wird.

8. Verfahren nach Anspruch 1, wobei der Schritt des Auswählens in einer Synchronisationsmaschine in einem Soziale-Medien-Portal durchgeführt wird, und wobei der Schritt des Verbindens unter Benutzung einer Schnittstelle durchgeführt wird, welche spezifisch für die Soziale-Medien-Plattform ist.

9. Verfahren nach Anspruch 1, wobei der Schritt des Auswählens einer Synchronisationstätigkeit durch eine Synchronisationsmaschine durchgeführt wird, die Schritte des Verbindens und des Synchronisierens durch die Synchronisationsmaschine in Verbindung mit einer externen Aktualisierungsschnittstelle durchgeführt werden, und der Schritt des Setzens der Synchronisationstätigkeit zurück in die Rangliste durch eine Rangmaschine durchgeführt wird.

10. Soziale-Medien-Portal (150) zum Synchronisieren von Benutzerinhalten mit einer Soziale-Medien-Plattform, das Portal umfassend:
- eine Soziale-Inhalte-Datenbank (154) zum Speichern von Daten, welche einem Benutzer zugeordnet sind;
- eine Benutzerdatenbank (152) zum Speichern von Profilinformationen, welche dem Benutzer zugeordnet sind,
- eine Synchronisationsliste (156) zum Speichern von jeweils einen Rang einnehmenden Synchronisationstätigkeiten;
- eine Synchronisationsmaschine (158) zum Synchronisieren, über eine Soziale-Medien-Plattformschnittstelle, von Daten, welche in der Soziale-Inhalte-Datenbank gespeichert sind, mit der Soziale-Medien-Plattform entsprechend der Profilinformationen nach einem Zeitplan, welcher entsprechend der Synchronisationsliste bestimmt wird; und
**gekennzeichnet durch**
- eine Rangmaschine (160) zum Bestimmen eines Rangs, welcher den Synchronisationstätigkeiten zugeordnet ist, und zum Ordnen der Synchronisationsliste entsprechend des bestimmten Rangs.

11. Portal nach Anspruch 10, wobei die Profilinformationen eine Identifikation eines Accounts auf der Soziale-Medien-Plattform und Berechtigungsinformationen beinhalten, welche dem Benutzer und dem identifizierten Account zugeordnet sind.

12. Portal nach Anspruch 11, wobei die Profilinformationen ferner einen Hinweis auf Inhaltstypen beinhalten, welche durch die Soziale-Medien-Plattform unterstützt werden.

13. Portal nach Anspruch 10, wobei ein Wert des durch die Rangmaschine bestimmten Rangs daraufhin vermindert wird, dass die Soziale-Medien-Plattform-Schnittstelle die Rangmaschine darauf hinweist, dass eine erfolgreiche Synchronisation erfolgt ist.

14. Portal nach Anspruch 13, wobei ein kleinerer Wert des Rangs in einer häufigeren Synchronisation resultiert.

15. Portal nach Anspruch 10, wobei die Rangmaschine die Synchronisationsliste durch Zuordnen einer Synchronisationszeit jeder Synchronisationstätigkeit ordnet, wobei die Synchronisationszeit entsprechend des bestimmten Rangs bestimmt ist.

## Revendications

1. Procédé de synchronisation d'un contenu avec une plateforme de média sociaux à partir d'un portail de média sociaux, le procédé comprenant de :
- sélectionner une activité de synchronisation dans une liste hiérarchisée ;
- connecter à une plateforme de média sociaux associée à l'activité sélectionnée ;
- synchroniser les données associées à l'activité de synchronisation sélectionnée et la plateforme de média sociaux connectée si le portail de média sociaux et la plateforme de média sociaux ont des données différentes ; et **caractérisé par**
- replacer l'activité de synchronisation dans la liste hiérarchisée à un emplacement déterminé conformément au fait qu'une synchronisation était nécessaire.

2. Procédé selon la revendication 1, dans lequel l'étape de sélection inclut de sélectionner une pluralité d'activités de synchronisation dans la liste hiérarchisée.

3. Procédé selon la revendication 2, dans lequel les étapes de connexion, synchronisation et replacement sont effectuées pour chacune de la pluralité d'activités.

4. Procédé selon la revendication 2, dans lequel le nombre d'activités dans la pluralité est déterminé par une valeur de bande passante disponible.

5. Procédé selon la revendication 1, dans lequel une synchronisation est déterminée être nécessaire si la plateforme de média sociaux et le portail de média sociaux ont des données différentes.

6. Procédé selon la revendication 1, dans lequel l'étape de replacement de l'activité de synchronisation dans la liste hiérarchisée inclut de :
- calculer informatiquement un rang associé à l'activité de synchronisation de l'utilisateur ; et
- placer l'activité de synchronisation dans la liste hiérarchisée conformément au rang calculé informatiquement.

7. Procédé selon la revendication 6, incluant en outre l'étape de calcul informatique d'un prochain temps de synchronisation conformément au rang et à une pondération associés à l'activité de synchronisation et dans lequel l'étape de replacement de l'activité de synchronisation dans la liste hiérarchisée est faite conformément au prochain temps de synchronisation calculé informatiquement.

8. Procédé selon la revendication 1, dans lequel l'étape de sélection est effectuée au niveau d'un moteur de synchronisation dans un portail de média sociaux et l'étape de connexion est effectuée en utilisant une interface spécifique à la plateforme de média sociaux.

9. Procédé selon la revendication 1, dans lequel l'étape de sélection d'une activité de synchronisation est effectuée par un moteur de synchronisation, les étapes de connexion et de synchronisation sont effectuées par le moteur de synchronisation en conjonction avec une interface de mise à jour externe et l'étape de replacement de l'activité de synchronisation dans la liste hiérarchisée est effectuée par un moteur de hiérarchisation.

10. Portail de média sociaux (150) pour synchroniser le contenu d'un utilisateur avec une plateforme de média sociaux, le portail comprenant :
- une base de données de contenu social (154) pour mémoriser des données associées à un utilisateur ;
- une base de données d'utilisateur (152) pour mémoriser des informations de profil associées à l'utilisateur ;
- une liste de synchronisation (156) pour mémoriser des activités de synchronisation hiérarchisées ;
- un moteur de synchronisation (158) pour synchroniser des données mémorisées dans la base de données de contenu social avec la plateforme de média sociaux à travers une interface de plateforme de média sociaux, conformément aux informations de profil selon une programmation déterminée conformément à la liste de synchronisation ; et
**caractérisé par**
- un moteur de hiérarchisation (160) pour déterminer un rang associé aux activités de synchronisation et pour ordonner la liste de synchronisation conformément au rang déterminé.

11. Portail selon la revendication 10, dans lequel les informations de profil incluent l'identification d'un compte au niveau de la plateforme de média sociaux et les identifiants associés à l'utilisateur et au compte identifié.

12. Portail selon la revendication 11, dans lequel les informations de profil incluent en outre une indication des types de contenu pris en charge par la plateforme de média sociaux.

13. Portail selon la revendication 10, dans lequel une valeur du rang déterminé par le moteur de hiérarchisation est décrémentée lorsque l'interface de plateforme de média sociaux indique au moteur de hiérarchisation qu'une synchronisation réussie a eu lieu.

14. Portail selon la revendication 13, dans lequel une valeur inférieure du rang entraîne une synchronisation plus fréquente.

15. Portail selon la revendication 10, dans lequel le moteur de hiérarchisation ordonne la liste de synchronisation en assignant un temps de synchronisation à chaque activité de synchronisation, le temps de synchronisation étant déterminé conformément au rang déterminé.
